# EUROPÄISCHE PATENTSCHRIFT

(11) **EP 2 525 010 B1**
(45) Veröffentlichungstag und Bekanntmachung des Hinweises auf die Patenterteilung: **06.07.2016**
(21) Anmeldenummer: 12003778.3
(22) Anmeldetag: 14.05.2012
(51) Int. Cl.: B32B 3/14, E04C 2/36, B32B 21/13, A47B 96/20

(54) **Leichtbauplatte, Verfahren und Vorrichtung zur Herstellung dieser Leichtbauplatte**
Lightweight construction, method and device for manufacture of the lightweight construction
Panneau de construction léger, procédé de fabrication et dispositif de fabrication pour ce panneau

(30) Priorität: 14.05.2011 DE 102011106185; 19.07.2011 DE 102011108022; 14.10.2011 DE 102011115897
(43) Veröffentlichungstag der Anmeldung: 21.11.2012
(73) Patentinhaber: Kettler Consulting & Engineering, 59649 Ense (DE)
(72) Erfinder: Kettler, Peter, 59469 Ense (DE)
(74) Vertreter: Tilmann, Max Wilhelm

(56) Entgegenhaltungen:
- EP-A1- 0 978 601
- EP-A2- 1 992 759
- WO-A1-01/63068
- WO-A1-2005/113230
- WO-A1-2009/033201
- CH-A- 203 499
- DE-A1- 2 154 419
- DE-A1-102006 027 281
- DE-C- 853 966

## Beschreibung

Die Erfindung betrifft eine Leichtbauplatte nach dem Oberbegriff des Anspruchs 1, ein Verfahren zur Herstellung einer Leichtbauplatte nach dem Oberbegriff des Anspruchs 8 und eine Vorrichtung zur Herstellung einer Leichtbauplatte nach dem Oberbegriff des Anspruchs 12.

Bekannte Leichtbauplatten aus Holzwerkstoffen weisen einen Deckel für die Oberseite und einen Deckel für die Unterseite auf, wobei zwischen den Deckeln für die Ober- und Unterseite eine Füllung vorgesehen ist. Die Füllung ist beispielsweise aus Styropor oder Mais gebildet Die Plattenherstellung wird von einem Plattenhersteller durchgeführt und verbraucht zumindest bei den Standardgroßformaten viel Klebstoff und viel Energie. Nach erfolgter Herstellung beim Plattenhersteller werden die Großformate zum Kommissionierer transportiert und nach individueller Bestellung beispielsweise der Möbel-Hersteller erfolgt ein Zuschnitt, wobei eventuell noch Umrahmungs-Stäbe eingesetzt werden und/oder Kanten angeleimt werden.

CH 203 499 A betrifft eine Tischlerplatte, die zwei Deckplatten aufweist, welche aus Furniersperrholz, Holzfaserplatten, Eternit und dergleichen bestehen können. Ferner weist die Tischlerplatte zwischen die Deckplatten eingesetzte und mit ihnen verleimte Elemente auf, die aus Sperrholzstreifen mit Himholzzwischenlagen bestehen können, wobei die Himholzstreifen auch weggelassen werden können.

DE 2 154 419 A1 beschreibt ein Fertigbauelement mit zwei im Abstand voneinander angeordneten Baustoffplatten und dazwischenliegenden, die beiden Platten miteinander verbindenden Distanzelementen. Die Distanzelemente können mit den Platten verklebt sein.

EP 0 978 601 A1 beschreibt eine Vorrichtung und ein Verfahren zur Herstellung eines Isolationselements, bei der bzw. dem zwischen einer Bodenplatte und einer Deckschicht rippenförmige Elemente mit Abstand zueinander vorgesehen sind. Hinsichtlich der Herstellung des Isolationselements wird ausgeführt, dass zunächst ein Schaum auf die Bodenplatte aufgebracht wird. Abschnitte des Schaums werden entfernt und in diese Abschnitte werden die rippenförmigen Elemente eingebracht. Ferner wird ausgeführt, dass die rippenförmigen Elemente zumindest mit der Bodenplatte verklebt werden.

EP 1 992 759 A2 beschreibt eine Leichtbauplatte mit zwei Decklagen und einer Mittellage, bei der ein Montageklebstoff und ein Endklebstoff verwendet werden, wobei die Aushärtdauer des Endklebstoffs länger als die Aushärtdauer des Montageklebstoffs ist. Hinsichtlich der Applizierung der Klebstoffe wird ausgeführt, dass erst der Endklebstoff, vorzugsweise vollflächig auf die jeweilige Decklage und/oder die Mittellage appliziert wird und anschließend der Montageklebstoff, vorzugsweise partiell, auf die jeweilige andere Oberfläche appliziert wird.

DE 10 2006 027 281 A1 beschreibt eine Leichtbauplatte mit Riegelverklebung, bei der ein Endklebstoff und ein Montageklebstoff verwendet werden, die in Querrichtung eines Riegels nebeneinander vorgesehen sein können.

Der Erfindung lag die Aufgabe zugrunde, eine verbesserte Leichtbauplatte, ein Verfahren zur Herstellung einer Leichtbauplatte und eine Vorrichtung zur Herstellung einer Leichtbauplatte anzugeben, bei der bzw. dem eine Verbesserung der Leichtbauplatte erreichbar ist, so dass ein Verzug eines Deckels oder eine sonstige Beeinträchtigung der Qualität vermindert ist. Zudem können Kosten eingespart werden und es wird eine niedrigere Kapitalbindung erzielt.

Diese Aufgabe wird durch den Gegenstand der unabhängigen Patentansprüche gelöst. Vorteilhafte Ausführungsformen sind Gegenstand der jeweiligen abhängigen Patentansprüche und ergeben sich aus der nachfolgenden Beschreibung der Erfindung.

Die Füllung der Leichtbauplatte kann als ein individuell zu positionierendes Riegel-System ausgebildet werden. Durch die Ausbildung der Füllung als Riegelkonstruktion kann eine große Flexibilität erreicht werden. Eine aufwendige Rahmenherstellung für die Leichtbauplatte entfällt vollkommen.

Die Leichtbauplatte umfasst je einen Deckel für die Ober- und die Unterseite sowie eine Füllung zwischen Ober- und Unterseite. Die Füllung weist individuell positionierte, in vorbestimmten Abständen angeordnete Riegel auf, die mit den Deckeln mittels mindestens zwei Klebstoffen stoffschlüssig verbunden sind. Die Riegel sind insbesondere bevorzugt nicht alle mit gleichem Abstand zueinander angeordnet. Es sind Ausführungsformen möglich, bei der die Mehrzahl der Riegel jeweils mit gleichem Abstand angeordnet sind, einzelne der vorhandnen Riegel jedoch mit einem größerem oder einem kleineren Abstand zu den ihnen jeweils benachbarten Riegeln angeordnet sind. Insbesondere bevorzugt kann die Anordnung der Riegel Rasterplätzen in einem Raster entsprechend erfolgen, wobei einige Rasterplätze, insbesondere bevorzugt ein Rasterplatz, besonders bevorzugt zwei Rasterplätze und ganz besonders bevorzugt fünf Rasterplätze nicht durch einen Riegel besetzt werden. Das Raster definiert sich über einen festgelegten Abstand. Jeder Rasterplatz ist in Richtung der Rasters um den festgelegten Abstand von dem benachbarten Rasterplatz entfernt. In der bevorzugten Ausführungsform sind an der Mehrzahl der Rasterplätze Riegel angeordnet, während an einigen Rasterplätzen keine Riegel angeordnet sind. In einer bevorzugten Ausführungsform sind keine Riegel vorgesehen, die nicht an einem Rasterplatz angeordnet sind. In einer besonders bevorzugten Ausführungsform ist nur ein Riegel vorgesehen, der nicht an einem Rasterplatz angeordnet ist, insbesondere bevorzugt sind nur 2 Riegel, ganz besonders bevorzugt nur 5 Riegel vorgesehen, die nicht an einem Rasterplatz angeordnet sind. Es kann auch vorgesehen sein, dass die Rasterplätze einen Abstand aufweisen, der der Dicke der Riegel in Querrichtung entspricht, so dass sofern zwei benachbarte Rasterplätze besetzt sind, kein Abstand zwischen den benachbarten Riegeln ausgebildet ist. Die Riegel können dann "ohne Zwischenraum" bzw. "ohne Luft" nebeneinander positioniert werden, wobei vorbestimmte Rasterplätze nicht belegt werden können. Der Abstand der Riegel kann bei einem Raster, dessen Abstand der Breite der Riegel entspricht, bei benachbart belegten Rasterplätzen "Null" betragen. Die erfindungsgemäße Leichtbauplatte zeichnet sich dadurch aus, dass sie randseitig offen ausgestaltet sein kann. Ein Rahmen mit zu den Seiten der Leichtbauplatte quer verlaufenden Riegeln ist nicht vorgesehen. Erfindungsgemäß wird unter dem Begriff Rahmen ein die Riegel umschließendes Gebilde umfasst, wobei insbesondere in Querrichtung zu den Riegeln ein einziges Querelement vorhanden ist, das die nebeneinander angeordneten Riegel endseitig abschließt. Damit ist erfindungsgemäß kein die Riegel abschließender einstückiger Querriegel, der mit den Riegeln in Kontakt kommt, vorgesehen. Im Rahmen der Erfindung kann es jedoch vorgesehen sein, dass Querriegel als Endstücke einer Leichtbauplatte vorgesehen sind, also insbesondere mehrere an einem Ende der Riegel, also mehrere Querriegel an einer Seite der Leichtbauplatte, quer zur Längsrichtung der Riegel angeordnete Riegel.
Das Raster für die Riegel kann Rasterplätze mit einem Abstand der Breite eines Riegels aufweisen. Die Riegel können demnach ohne seitlichen Abstand in der Leichtbauplatte angeordnet sein. Hierdurch kann ein "breiterer Riegel" in der Leichtbauplatte an Stellen "erzeugt" werden, indem mehrere Riegel direkt nebeneinander positioniert sind.

Ein Rasterplatz kann in Längsrichtung mit mehreren Riegeln besetzt sein, um die Materialeffizienz zu erhöhen. Ein Rasterplatz kann "gestückelt" besetzt werden. In Längsrichtung auf einem Rasterplatz angeordnete Riegel müssen nicht miteinander verklebt werden, sondern sind stumpf oder auch gegebenenfalls mit Lücke aneinander gereiht. Während ein Rasterplatz, beispielsweise in der Mitte der Leichtbauplatte, mit mehreren Riegeln in Längsrichtung besetzt ist, können die äußeren Rasterplätze mit nur einem Riegel besetzt sein oder umgekehrt. Selbstverständlich ist es auch möglich, dass vorbestimmte Rasterplätze alle mit mehreren Riegeln in Längsrichtung besetzt werden können, beispielsweise wenn mit kürzerem Ausgangsmaterial für die Riegel eine längere Leichtbauplatte gefertigt werden soll.

Unter dem Begriff "Deckel" sind hier flächenhafte Gebilde zu verstehen, die aus unterschiedlichen Materialien bestehen können, insbesondere bilden die Deckel eine geschlossene Fläche aus. Die Deckel bilden quasi die Deckschichten oder Deckplatten für die Leichtbauplatte. Mögliche Materialien für die Deckel der Ober- und Unterseite sind Spanplatte, Dünnspanplatte, MDF (mitteldichte Holzfaserplatte), HDF (hochdichte Faserplatte), HPL (high pressure laminat), Kunststoffe, Bleche, Stahl, Pappe, mineralische Werkstoffe wie z.B. Gips, oder Brandschutzplatten. Die Oberflächen der Deckel können roh geschliffen oder ungeschliffen sein. Die Deckel können bedruckt, lackiert, mit einer Folie versehen oder beispielsweise furniert sein. Die Oberfläche der Deckel kann Melamin als Direktbeschichtung aufweisen. Zudem kann die Oberfläche der Deckel HPL- bzw. einen CPL-Schichtstoff aufweisen, der beispielsweise bei der Beschichtung von Türblättern verwendet wird. Die auf den Deckel möglicherweise aufgebrachten Beschichtungen können ein- oder beidseitig aufgebracht sein. Der Deckel für die Oberseite muss im Hinblick auf die Stärke bzw. Dicke des Deckels, das Material und die Oberfläche nicht zwangsläufig identisch zu dem Deckel für die Unterseite sein. Der obere und der untere Deckel können unterschiedlich ausgestaltet sein, insbesondere ist eine asymmetrische Ausgestaltung möglich. Es können auch mehrere Platten pro Seite asymmetrisch vorliegen. Die Deckel können eine Dicke von 2,5 bis 8 mm aufweisen und eine Flächenabmessung von 2.500 x 1.300 mm haben. Es sind aber auch Dicken von ab 1,8 mm für MDF und HDF sowie 0,8 mm für HPL möglich. Zudem kann die Flächenabmessung größer gewählt werden, beispielsweise für Küchenarbeitplatten, bei der Abmessungen von 3.000 mm oder größer als 4.000 mm erzeugt werden sollen.

Unter dem Begriff "Klebstoff" werden Stoffe verstanden, mit denen zwei zu fügende Teile stoffschlüssig verbunden werden können. Insbesondere ist unter dem Begriff "Klebstoff" auch ein Leim, d. h. eine wässrige Lösung von Klebstoff, zu verstehen. Der Begriff "Klebstoff" so wie er hier verwendet wird stellt keine Einschränkungen dar, sondern bezeichnet jegliches Material, das mit dem Deckel bzw. dem Riegel an der entsprechenden Oberfläche haftet durch physikalische oder chemische Wechselwirkung, wobei das Haften des Klebstoffs an den Oberflächen der zu fügenden Teile auch Adhäsion genannt wird. Unter dem Begriff "Klebstoff" sind auch Dispersionen, insbesondere D-2 (geeignet für den Innenbereich mit gelegentlicher kurzzeitiger Wasser- bzw. Kondenswassereinwirkung, wobei die Holzfeuchte maximal 18% erreichen darf) und D-3 (geeignet für den Innenbereich mit häufig kurzzeitiger Wassereinwirkung oder höherer Luftfeuchte. Geeignet für den Außenbereich ohne Aussetzung einer direkten Bewitterung), ein Hotmelt (Schmelzklebstoff) und reaktive Systeme, die elastisch ausgebildet sein können, beispielsweise ein 1K-System, d.h. ein 1-Komponenten-Klebstoff, der durch Veränderung der Umgebungsbedingungen oder chemische Wechselwirkung mit der Oberfläche der zu fügenden Teile aushärtet, zu verstehen.

Bevorzugt sind die Riegel als Längsriegel ausgebildet, die in einem Raster nebeneinander angeordnet sind. Die Längsriegel weisen bevorzugt im Querschnitt eine rechteckige Form auf, wobei die Dicke größer als die Breite des Riegels ist, so dass die Dicke bevorzugt größer als 15 mm ist. Durch die Verwendung von Längsriegeln, die im Wesentlichen eine Länge aufweisen, die sich über eine Längserstreckung der Leichtbauplatte erstreckt, entfällt die aufwendige Rahmenherstellung, bei Erhaltung der Vorteile einer Riegelkonstruktion. Die Leichtbauplatte wird über die gesamte Länge "unerstützt". Als Material für die Riegel kann Span, MDF, HDF, Sperrholz, OSB (Oriented Strand Board, eine Grobspanplatte), Massivholz, Profile aus Metall, Kunststoff oder Holzwerkstoffen (z.B. Arbofill), Fipro, Brandschutzplatten, Gips, Schäume, Leichtbauplatten, Tischlerplatte und/oder Röhrenspan-Streifen vorgesehen sein.

Sofern als Deckel eine Leichtbauplatte verwendet wird, so lassen sich die Leichtbauptte doppeln oder sogar mehrfach stapeln, wobei als Mittellagen Spanmaterial verwendet werden kann. Die Abfolge der Schichten wäre dann beispielsweise Deckel, Riegel, Deckel, Riegel, Deckel und eventuell weitere Riegel und Deckel.

Vorzugsweise sind die Riegel in einer Rasterung angeordnet, wobei ein Mindestabstand zwischen zwei benachbarten Riegeln von 16 mm ausgebildet ist. Hierdurch wird eine besonders hohe Flexibilität erreicht. Beispielsweise kann es für Möbelbeschläge und zur Konstruktion auch ausreichend sein, einen Mindestabstand von 32 mm zu wählen. Insbesondere bevorzugt kann es sein, dass ein gleichmäßiger Abstand zwischen Riegeln in der Rasterung vorliegt, wobei zumindest eine "benachbarte" Rasterung unbesetzt ist.

Für eine besonders einfache Ausgestaltung der Leichtbauplatte kann es vorgesehen sein, dass die Riegel bezüglich der Mittellinie der Leichtbauplatte in Längsrichtung der Riegel symmetrisch angeordnet sind. Hierdurch können die Leichtbauplatten im Hinblick auf die die Leichtbauplatte verstärkenden Riegel auch in einer Drehung der Leichtbauplatte um eine Normale der Leichtbauplatte um 180° verwendet werden, ohne dass auf eine besondere Ausrichtung der Leichtbauplatte geachtet werden muss. Durch die symmetrische Anordnung der Riegel in der Leichtbauplatte existiert keine Vorzugsrichtung. Sofern die Deckel identisch sind, kann die Leichtbauplatte auch um die Mittellängsachse um 180° gedreht werden.

Die Riegel können aus Vollmaterial ausgebildet sein, wobei insbesondere am Rand der Leichtbauplatte angeordnete Riegel als Vollriegel ausgebildet sind. In der Mitte der Leichtbauplatte angeordnete "Mittelriegel" können in abweichenden Qualitäten ausgestaltet sein. Die Mittelriegel können aus Schäumen oder Profilen oder als gelochte Varianten ausgebildet sein. Die Riegel können ihrerseits wieder aus aufgeschnittenen Leichtbauplatten bestehen. Zur Gewichtseinsparung oder um innerhalb der Leichtbauplatte beispielsweise Kabel zu führen kann zumindest einer der Riegel zumindest ein quer verlaufendes Durchgangsloch aufweisen. Insbesondere bevorzugt weist ein Riegel mehrere quer verlaufende Durchgangslöcher auf. Es kann zudem vorgesehen sein, dass die Riegel eine Breite von 13 mm aufweisen, wobei auch andere Dicken möglich sind. Eine Kombination von unterschiedlichen Materialien und/oder Ausgestaltungen der Riegel ist möglich. Auch sind unterschiedliche Dicken von Riegeln möglich. Beispielsweise kann ein schmaler Außenriegel als sichtbarer Riegel ein Edelholz aufweisen bzw. aus diesem bestehen; benachbart zu dem Außenriegel (im nicht sichtbaren Bereich) kann ein günstiger Verstärkungsriegel angeordnet werden. Auch ist es möglich, einen sehr breiten Außenriegel im Gegensatz zu den innen liegenden Riegeln zu verwenden, der profiliert ist oder wird.

Durch eine Riegelbreite von 13 mm und einem Raster von 16 mm kann der aus der Möbelkonstruktion bekannte Bohrabstand von 32 mm abgebildet werden. Das Füllungs-Raster gibt die Gewichts- und Preiseinsparung gegenüber einer massiven Platte vor, beispielsweise kann bei einem Füllungsraster von 1/4 (eine Position des Rasters mit einem Riegel besetzt, drei darauffolgende Positionen des Rasters nicht mit einem Riegel besetzt usw.) ein Deckel mit einer Stärke bzw. Dicke von ≥ 4 mm gewählt werden. Ab einer Dicke des bzw. der Deckel von 8 mm sind noch größere Raster möglich. Ein Raster von 1/4, d.h. nur jede vierte Position eines Rasters ist in Folge besetzt, ergibt ein Gesamtraster von 64 mm, wobei die Riegel in dem Raster so positioniert sind, dass aufgrund der Breite der Riegel von 13 mm ein Mindestabstand von benachbarten Riegeln von 2 x 1,5 mm vorliegt, da die Riegel die Rasterposition nicht vollständig ausfüllen. Die Riegel können so gewählt werden, dass in den entsprechenden Plattenbereichen Befestigungen vorgesehen werden können, d. h. also Material vorhanden ist, das wie Vollmaterial wirkt. Ebenso kann es vorgesehen sein, dass bewusst freie Bereiche für Einbauten geschaffen werden, in denen keine Riegel vorhanden sind. Es können aber auch Riegel mit einer Breite von 16 mm und einem Raster von 16 mm gewählt werden.

Vorzugsweise können die Riegel entlang ihrer Längsachse hinsichtlich der die Deckel kontaktierenden Seite eine Profilierung aufweisen. Die Profilierung kann beispielsweise durch ein Abfräsen der Riegel nach dem Verkleben mir einem der Deckel erstellt werden. Durch die Profilierung können beliebige 3D-Formen für z.B. Türenfronten und Wandpaneele erzeugt werden. Durch die Profilierung sind 3D-Formen sowohl in Längsrichtung der Riegel als auch quer hierzu möglich. Bei weichen Materialien für die Deckel ist eine Kombination möglich. Es ist zudem möglich, dass die Pressgegenstücke im gleichen Verfahren gefertigt werden, d.h. dass beispielsweise die Riegel aus einem gegebenenfalls verstärkten Material wie z.B. Sperrholz für die Mehrfachnutzung bestehen), wodurch die Herstellung von einfachsten Pressen ermöglicht ist. Durch die Einbringung einer Nut kann ein Deckel gesteckt werden und hält durch Eigenspannung.

Die mit einem Deckel verbundene Seite eines Riegels kann gerade oder mit einer leichten Einkerbung für den Klebstoff gefertigt werden. Die Einkerbung erhöht die Oberfläche der mit dem Klebstoff in Kontakt kommenden Seite des Riegels und gegebenenfalls die Stabilität der Klebung.

Eine Leichtbauplatte weist zumindest zwei unterschiedliche Klebstoffe auf, insbesondere eine Dispersion bzw. einen Dispersionsleim und einen Hotmelt. Die beiden Klebstoffe sind zum Ausbilden einer stoffschlüssigen Verbindung zwischen einem Deckel und einem Riegel in Längsrichtung des Riegels alternierend aufgebracht. Der Abstand zwischen den aufeinanderfolgenden Auftragungsorten des Hotmelt kann im Bereich von 200 mm bis 400 mm gewählt sein, bevorzugt 300 mm. Unter Auftragungsort ist erfindungsgemäß der "Schwerpunkt" bzw. Mittelpunkt der Auftragungsfläche des Hotmelts zu verstehen. Der Hotmelt wird flächenmäßig auf kleiner Fläche aufgetragen. Der Hotmelt kann punktförmig oder raupenförmig aufgetragen werden. Der Auftrag für den Hotmelt kann quer zum Riegel in einer Breite erfolgen, die ungefähr ¾ der Riegelbreite entsprechen kann. Es kann auch vorgesehen sein, dass die Breite des Auftrags für den Hotmelt die Breite eines Riegels übersteigt. Die Dispersion bzw. der Dispersionsielm kann linienförmig entlang der Längserstreckung des Riegels aufgetragen werden, d.h. der Auftrag erfolgt mit einer Länge zwischen aufeinanderfolgenden Hotmeltpunkten, die größer als die Breite des Riegels ist. Der Dispersions- bzw. Dispersionsleimauftrag kann ungefähr mit einer Breite aufgetragen werden, die einem Drittel der Riegelbreite entspricht. Die Bereiche mit Hotmelt sind geringer als die Bereiche mit Dispersion bzw. Dispersionsleim. An jedem Ende eines Riegels ist ein Hotmelt zur Ausbildung einer stoffschlüssigen Verbindung zwischen Riegel und Deckel angeordnet. Es kann ein Raster aus Hotmeltpunkten gebildet werden, das variabel ausgelegt werden kann. Durch die Verwendung eines Hotmelts kann sichergestellt werden, dass eine erste Fixierung der Riegel erfolgt Ein Hotmelt ist zur Fixierung von verschiedensten Materialien verwendbar, wobei sich ein Hotmelt auch für poröse oder faserige Werkstoffe oder Materialen eignet. Durch die Verwendung zweier unterschiedlicher Klebstoffe ist damit die Flexibilität weiter erhöht. Zudem ist durch eine mögliche Verwendung eines Hotmelts neben beispielsweise einem Holzleim oder Holzleimdispersion durch den Hotmelt ermöglicht, dass ein Klebstoff mit einer einfachsten Anwendung verwendet wird, der lösemittelfrei bei nahezu unbegrenzter Lagerbarkeit ist. Des Weiteren können Hotmeltreste durch Aufheizen verflüssigt und von den meisten Oberflächen rückstandsfrei entfernt werden, was u.a. die Reinigung der Werkzeuge, mit denen die Klebstoffe aufgetragen werden, beispielsweise ein Düsenauftragssystem, vereinfacht. Ferner kann durch die Verwendung eines Hotmelts eine Unebenheit von zu verklebenden Oberflächen ausgeglichen werden. Die Hauptfestigkeit von den verklebten Riegeln mit den Deckeln wird über den wesentlich kostengünstigeren Dispersionsleim erreicht, der allerdings eine deutlich längere Abbindezeit benötigt. Somit kann die Leichtbauplatte bei Verwendung von Dispersionsleim und Hotmelt als zwei unterschiedliche Klebstoffe schnell gefertigt werden, und die Aushärtung erfolgt dann nach der ersten Fertigungsstufe.

Zur weiteren Erreichung einer Verstärkung der Leichtbauplatte kann mindestens eine Querstrebe zwischen den Riegeln vorgesehen sein, die insbesondere als Aufnahme von Schraubbefestigungen dienen kann. Hierdurch wird eine Leichtbauplatte mit geringem Gewicht geschaffen, aber gleichzeitig wird an besonders beanspruchten, insbesondere für Schraubbefestigungen vorgesehenen Stellen eine Verstärkung der Leichtbauplatte durch Querstreben erreicht. Zudem können durch zusätzliche Riegel, die beispielsweise in einer Schablone angeordnet sind, Rahmen für eine oder mehrere Öffnungen, beispielweise eine oder mehrere Glasöffnungen ohne Anbindung für eine Innentüre, angeordnet werden. Die zusätzlichen Riegel können frei positioniert werden, indem z.B. an vorbestimmten Stellen in der Schablone Plätze für zusätzliche Riegel vorgesehen sind, die je nach Anwendung besetzt oder nicht besetzt werden.

Vorzugsweise weist die Leichtbauplatte Riegel unterschiedlicher Länge auf. Durch die Bereitstellung unterschiedlicher Längen von Riegeln können neben den durchgehenden Längsriegeln, die sich nahezu über die gesamte Länge der Leichtbauplatte in einer Richtung erstrecken, kleine Kurzriegel als Knotenpunkte eingeführt werden. Hiermit wird die gleiche Funktion wie die eines Querriegels erreicht. Insbesondere bevorzugt sind Kurzriegel mit einer einheitlichen Länge von beispielsweise 40 mm. Für die Kurzriegel kann an den für sie vorgesehenen Knotenpunkten ein Leimdüsenauftragssystem vorgesehen sein, bei dem bei Bedarf gezielt eine stärkere Leimabgabe erfolgt. Die kürzeren Riegel können bevorzugt benachbart zu den Enden der Längsriegel neben diesen, insbesondere bevorzugt in paralleler Ausrichtung zu diesen, angeordnet sein.

In einer bevorzugten Ausführungsform weist die Leichtbauplatte zumindest zwischen zwei Riegeln eine Wabenfüllung auf, so dass eine weitere Flexibilität erreicht werden kann.

In einer weiteren bevorzugten Ausführungsform weist die Leichtbauplatte keine Füllung zwischen den Riegeln auf. Der zwischen den Riegeln und den Deckeln gebildete Raum kann frei sein. Der Raum zwischen den Riegeln kann füllungs- bzw. wabenfrei sein. Erfindungsgemäß wird unter dem Begriff "keine Füllung" erfasst, dass kein Werkstoff oder Material vorgesehen ist, mit dem der Raum zwischen den Riegeln verkleinert werden soll, d.h. das Volumen an Hohlraum verringert werden soll.

Erfindungsgemäß wird auch ein Verfahren zur Herstellung einer Leichtbauplatte geschaffen, die je einen Deckel für Ober- und Unterseite aufweist. Das erfindungsgemäße Verfahren umfasst das Auftragen von Klebstoff an vorbestimmten Positionen der Deckel, ein Positionieren von Riegeln an den vorbestimmten Positionen und ein Verpressen der Riegel mit den Deckeln an den vorbestimmten Positionen. Vorzugsweise wird erst ein Deckel mit den Riegeln verpresst, sodann ein Füllmaterial zwischen den Riegeln eingelegt, und dann der zweite Deckel der anderen Seite mit den Riegeln verpresst. Bei dem Füllmaterial kann es sich um Dämmstoffe, beispielsweise Glaswolle, oder auch um technische Vorrichtungen, wie Sensoren, Beleuchtungsmittel, Transformatoren usw. handeln. Die Einlegung des Füllmaterials kann automatisiert oder manuell in einer Einlegestation erfolgen, in der der Deckel mit den damit verpressten Riegeln auf der den Riegeln gegenüberliegenden Seite aufliegt.

Es kann auch vorgesehen sein, dass zwei Deckel, mit denen jeweils Riegel verbunden sind, zunächst verschachtelt werden, ohne dass eine Verleimung vorgenommen wird. Dadurch kann eine solche Platte zunächst von einer Melaminpresse, also einer Presse mit der eine Beschichtung einer Holzwerkstoffplatte mit Melaminfilmen durchgeführt wird (Pressdrücke größer gleich 20 kg / cm² und Temperaturen von ungefähr 160 bis 180 °C), beschichtet werden. Leichtbauplatten nach dem Stand der Technik würden zerquetscht und solche mit Rahmenkonstruktionen würden im Hohlbereich nachgeben, so dass keine Oberflächenverbindung entsteht. Nach einem Beschichtungsvorgang könnten die Platten auseinander gezogen werden und die Rückseite wird mit einer einfachen Deckschicht versehen. Es kann aber auch vorgesehen sein, dass die beiden Halbplatten riegelseitig verklebt werden, so dass eine doppelt so dicke melaminbeschichtete Leichtbauplatte entsteht. Auf diese Weise lassen sich sämtliche Arbeitsplatten beispielsweise für Küche und Büro mit einer bewährten Oberfläche erzeugen mit den Vorteilen einer Leichtbauplatte.

Unter "Auftragen von Klebstoff" ist das Auftragen eines Klebstoffs per Düse zu verstehen, sodass der Klebstoff beim Verpressen des Riegels mit dem Deckel nicht über den Riegelrand hinaus quillt. Der Klebstoffauftrag erfolgt bevorzugt per Düsen auf die Deckel bei einer Stärke von 1,8 mm bis 8 mm. Für derartige Dicken der Deckel ist keine Verstellung erforderlich. Der Klebstoffauftrag kann auf den Deckeln gespiegelt aufgetragen werden, d. h. beim Drehen der Deckel oben bzw. unten. Bevorzugt erfolgt der Klebstoffauftrag mittels einer Lineareinheit, die mit Klebstoffauftragsdüsen bestückt ist. Der Klebstoffauftrag erfolgt in Form von Klebstoffraupen. Für eventuelle Kurzriegel kann das Klebstoffauftragssystem für die Knotenpunkte, d. h. die Positionen der kürzeren Riegel, bei Bedarf gezielt eine stärkere Klebstoffabgabe durchführen. Der Klebstoffauftrag erfolgt damit mittels eines Auftragsdüsensystems mit einer Lineareinheit, die mit Klebstoffauftragsdüsen bestückt ist. Die Bestückung kann parallel mit unterschiedlichen Düsen für Heiß- und Kaltleim vorliegen oder zusätzlich zur Leistungssteigerung mit mehreren gleichen Düsen erfolgen. Alternativ kann der Deckel unter fest angeordneten Düsen vorbeigeführt werden. Die Bewegung des Deckels kann beispielsweise mittels eines Roboters erfolgen.

Vorzugsweise wird bei dem Verfahren zur Herstellung einer Leichtbauplatte eine Schablone verwendet, in der die Riegel einer Leichtbauplatte angeordnet werden. Falls eine Schablone verwendet wird, kann das Verfahren zur Herstellung einer Leichtbauplatte wie folgt ablaufen. Auf einem Deckel wird an vorbestimmten Positionen Klebstoff aufgetragen, und die Schablone mit den an vorbestimmten Positionen angeordneten Riegeln zum Deckel ausgerichtet. Die Schablone läuft zusammen mit dem Deckel für die Oberseite in eine Presseinheit ein und es erfolgt ein Verpressen. Nachfolgend fährt die Presseinheit wieder hoch und zieht die Oberseite mit den Riegeln, die nunmehr mit dem Deckel verklebt sind aus der Schablone. Die Schablone fährt aus der Presseinheit aus und ein mit Klebstoff an vorbestimmten Positionen versehener Deckel für die Unterseite fährt in die Presseinheit ein. In einem nachfolgenden Schritt wird der untere Deckel für die Unterseite mit den Riegeln und dem Deckel für die Oberseite verpresst, sodass die Leichtbauplatte fertiggestellt ist. Die Leichtbauplatte fährt dann aus der Presseinheit aus.

In einer bevorzugten Ausführungsform sind zwischen dem Deckel und der Schablone in zumindest einem der freien Riegelraster Federelemente eingesetzt, die dafür sorgen, dass erst beim Verpressen von Deckel und Riegeln die Riegel mit dem aufgetragenen Klebstoff in Kontakt gelangen.

Alternativ zur Verwendung einer Schablone kann es bevorzugt vorgesehen sein, dass auf einem Tisch positionierte Riegel - ohne Verwendung einer Schablone - mit einem mit Klebstoff versehenen Deckel verpresst werden. In einer wiederum anderen Ausführungsform können die Riegel aus einem Magazin einzeln auf der Platte positioniert werden an den vorbestimmten Positionen, an denen auch Klebstoff aufgetragen ist.

In einer bevorzugten Ausführungsform kann eine Schablone verwendet werden, die an mindestens zwei Seiten zumindest je einen Anschlag aufweist zum Positionieren der Schablone mit einem Deckel. Damit kann der Deckel exakt parallel zur Schablone positioniert werden. In einer bevorzugten Ausführungsform sind die Anschlagpunkte im Pressblech der Presseinheit ausgekerbt. Alternativ hierzu sind die Anschläge derart federnd ausgestaltet, dass die Anschläge beim Herunterdrücken bzw. Verpressen der Deckel mit den Riegeln einfedern bzw. heruntergedrückt werden.

Besonders bevorzugt werden zwei unterschiedliche Klebstoffe auf die Deckel aufgebracht, wodurch eine verbesserte Stabilität der Klebung erreicht wird.

In einer bevorzugten Ausführungsform können die Düsen des Auftragssystems für den Klebstoff fix angeordnet werden, sodass sich dieser nicht bewegen, stattdessen wird der Deckel an den Düsen vorbeibewegt.

In einer weiteren bevorzugten Ausführungsform werden die beiden unterschiedlichen Klebstoffe in verschiedenen Auftragsrichtungen aufgebracht. Bevorzugt handelt es sich dabei um einen Dispersionsleim und einen Hotmelt bzw. Schmelzkleber. Da der Schmelzkleber meist in geringerer Menge aufgebracht wird kann es daher vorgesehen sein, dass die Auftragung des Schmelzklebers quer zur Auftragung des Dispersionsleims erfolgt. Der Dispersionsleim wird mit Abständen aufgetragen, danach wird in die Lücken der Schmelzkleber positioniert, wobei der Abstand der Schmelzkleberpunkte flexibel einstellbar ist. Durch die Verwendung zweier Auftragsrichtungen, die insbesondere quer zueinander verlaufen, kann erreicht werden, dass die Anzahl der Hotmelt-Düsen minimiert wird. Es hat sich herausgestellt, dass der Hotmelt mit Relativgeschwindigkeiten von Deckel zu Auftragsdüse von bis zu 65 m/min, insbesondere bis 63 m/min, aufgetragen werden kann. Es kann sich ein raupenmäßiger Auftrag des Hotmelts ergeben.

Es kann auch vorgesehen sein, dass ein dritter Klebstoff verwendet wird, so dass auch Sondermaterialien für die Riegel, beispielsweise Kunststoff, Metall usw., verwendet werden kann.

Zudem wird erfindungsgemäß eine Vorrichtung zur Herstellung einer Leichtbauplatte geschaffen, die in einer bevorzugten Ausführungsform eine Einrichtung zur individuellen Positionierung von Riegeln in vorbestimmten Abständen aufweist.

Besonders bevorzugt ist, dass die Vorrichtung zur Herstellung einer Leichtbauplatte auch eine Einrichtung zur Riegelfertigung aufweist, sodass in der Vorrichtung zur Herstellung der Leichtbauplatte die Riegelfertigung integriert ist. Zur Erzielung einer Materialersparnis kann das Riegelgrundmaterial in einem ersten Arbeitsgang endlos verleimt werden. Das endlos verleimte Riegelgrundmaterial kann anschließend auf die benötigten Maße zugeschnitten werden, so dass kein Verschnitt anfällt.

Die Erfindung wird nachfolgend anhand von in den Zeichnungen dargestellten Ausführungsbeispielen näher erläutert. Darin zeigt:
- Fig. 1:: schematisch einen Deckel einer erfindungsgemäßen Leichtbauplatte mit einer Rasterung zur Positionierung von Riegeln;
- Fig. 2:: schematisch eine erfindungsgemäße Leichtbauplatte mit einer 1/4 Rasterung mit Riegeln;
- Fig. 3:: schematisch eine Leichtbauplatte mit einer Mittelverstärkung als Ausführungsbeispiel für eine Leichtbauplatte mit einer Befestigungsmöglichkeit für eine Kleiderstange;
- Fig. 4:: schematisch eine Ausführungsform einer Leichtbauplatte als Wandbord 4-fach nebeneinander;
- Fig. 5:: schematisch Ausführungsbeispiele von verschiedenen Riegeln;
- Fig. 6a:: schematisch einen Schnitt durch eine erfindungsgemäße Leichtbauplatte in einer alternativen Ausführungsform in einer Ansicht von oben;
- Fig. 6b:: schematisch eine Teilansicht der Ausführungsform von Fig. 6a in perspektivischer Ansicht;
- Fig. 6c:: schematisch eine Teilansicht der Ausführungsform von Fig. 6a in einer Ansicht auf ein Längsende;
- Fig. 7:: eine Schablone zur Anordnung von mit einem Deckel zu verklebenden Riegeln;
- Fig. 8:: schematisch vereinfacht ein Verfahren zum Herstellen einer erfindungsgemäßen Leichtbauplatte und
- Fig. 9:: schematisch ein Klebstoffauftragungssystem und ein Verfahren zum Auftragen von Klebstoff für ein erfindungsgemäßes Verfahren zur Herstellung einer Leichtbauplatte.

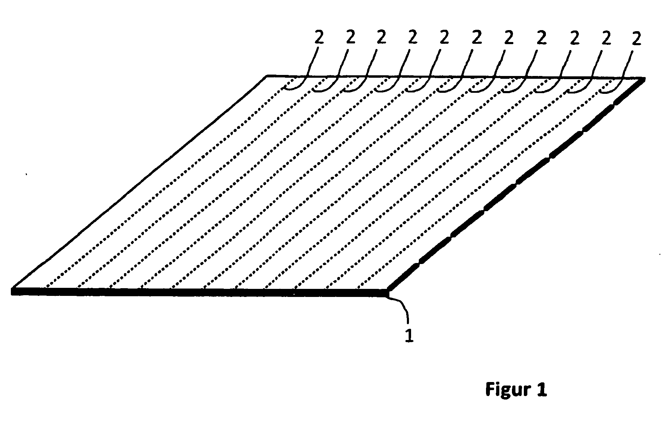

Figur 1 zeigt schematisch einen Deckel 1 einer erfindungsgemäßen Leichtbauplatte. Mit gestrichelten Linien 2 ist ein Raster bzw. eine Rasterung auf dem Deckel 1 deutlich gemacht, innerhalb dem Riegel auf dem Deckel 1 zur Erstellung einer erfindungsgemäßen Leichtbauplatte angeordnet und verklebt werden können. Das Raster ist so ausgebildet, dass äquidistante Abstände zwischen den einzelnen Rasterpositionen, die durch die gestrichelten Linien 2 verdeutlicht sind, vorliegen und die Rasterung jeweils parallel zu einer Seite des Deckels 1 verlaufen.

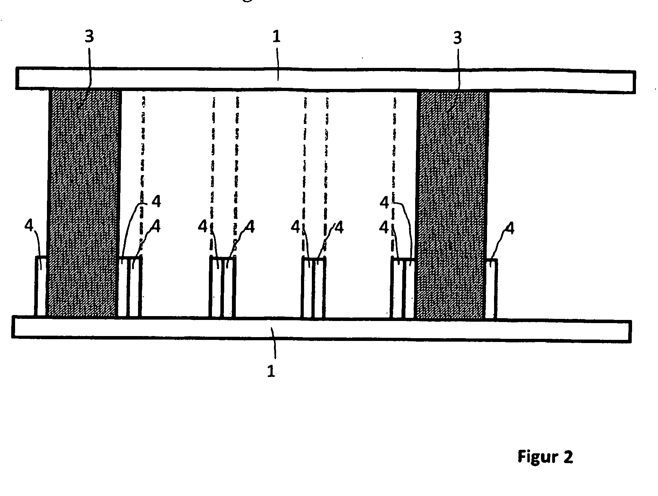

In Figur 2 ist eine erfindungsgemäße Leichtbauplatte in einem Schnitt quer zur Längsrichtung der Riegel 3 gezeigt. Es liegt je ein Deckel 1 für die Ober- und Unterseite der Leichtbauplatte vor. Die Riegel 3 sind mit dem Deckel 1 jeweils verklebt. Gemäß dem in Figur 2 dargestellten Ausführungsbeispiel weisen die Riegel 3 eine Dicke auf, die geringer ist als der geringste mögliche Abstand zwischen zwei Linien 2 des in Figur 1 gezeigten Rasters. Hierdurch entstehen Mindestabstände zwischen zwei Riegeln 3, die auf benachbarten bzw. auf einander folgenden Rasterpositionen angeordnet sind. Die Mindestabstände sind durch die in Figur 2 gezeigten Balken 4 deutlich gemacht. Es kann auch vorgesehen sein, dass ein Mindestabstand von 0 mm - also kein Zwischenraum - gewählt werden kann. Die Riegel 3 können eine Höhe von bis zu 100 mm einnehmen. In Figur 2 ist eine so genannte 1/4 Füllung des Rasters gezeigt, bei der jede vierte Position des Rasters mit einem Riegel 3 besetzt ist.

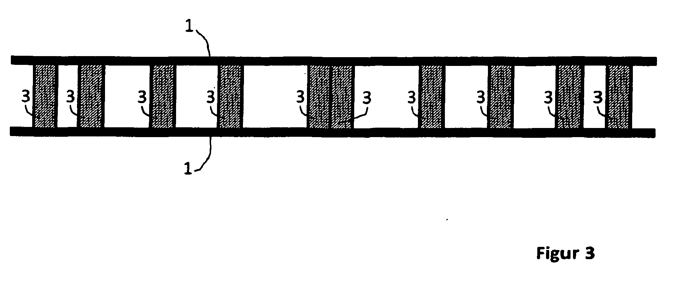

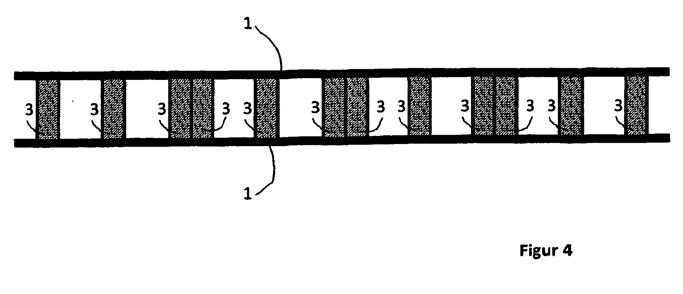

Die Figuren 3 und 4 zeigen Beispiele für Leichtbauplatten wie sie für eine Kleiderschrankseite mit Mittelverstärkung für eine Kleiderstange (Fig. 3) und ein Wandbord, das 4-fach nebeneinander angeordnet ist (Fig. 4), vorliegen.

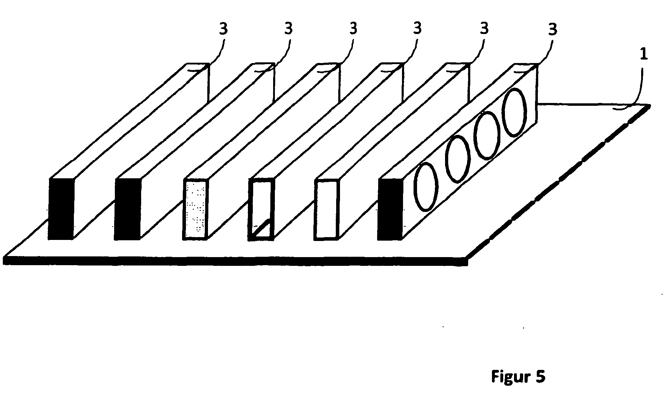

Die Figur 5 zeigt schematisch verschiedene Ausführungsformen von Riegeln 3, die auf einem Deckel 1 angeordnet sind. Es ergibt sich ein Füllungs-Raster von 1/3. Die beiden linken Riegel 3 sind in Vollmaterial ausgeführt. Der dritte Riegel von links weist ein Schaummaterial auf. Der vierte Riegel 3 von links ist hohl ausgestaltet. Der fünfte Riegel 3 von links umfasst ein zu bearbeitendes Material zur Erstellung eines Profils. Der sechste Riegel 3 von links ist eine gelochte Variante mit in Querrichtung bzw. quer verlaufenden Durchgangslöchern.

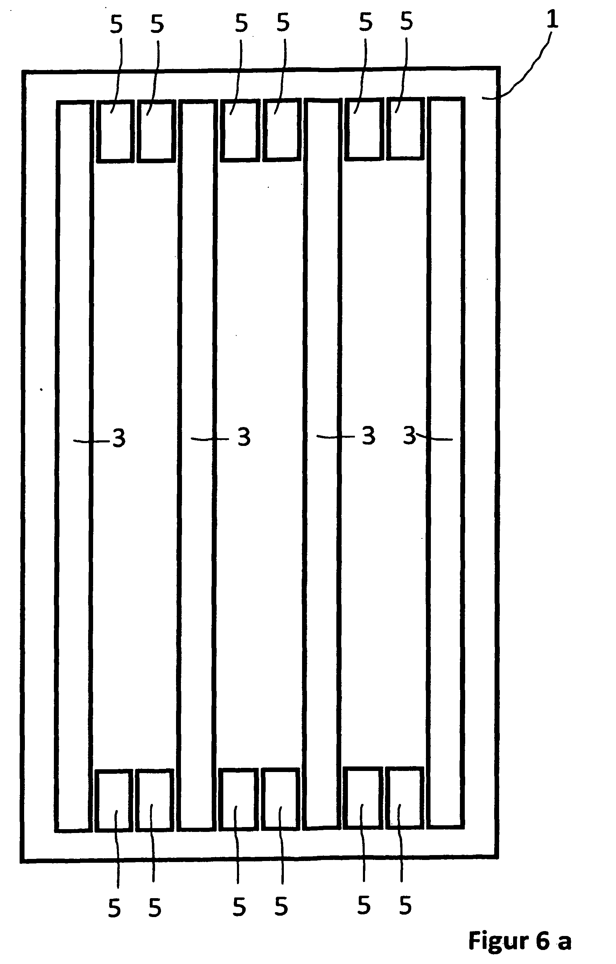

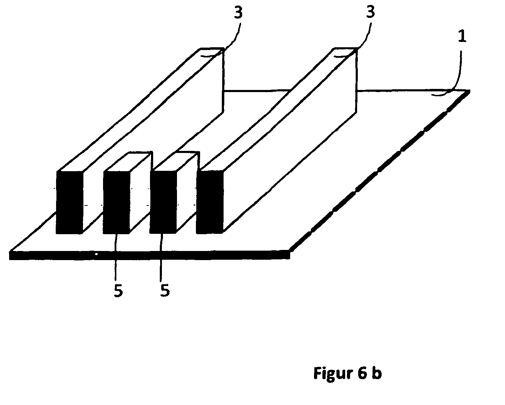

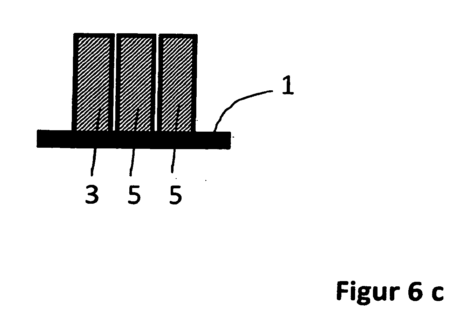

Figur 6 zeigt eine Ausführungsform, bei der zusätzlich zu den Riegeln 3 weitere Kurzriegel 5 in der Leichtbauplatte vorgesehen sind. Die Kurzriegel 5 sind ebenso wie die Riegel 3 mit den Deckeln 1 verklebt. Die Figur 6a zeigt eine Leichtbauplatte von oben ohne den Deckel 1 für die Oberseite. Zusätzlich neben den durchgehenden Riegeln 3 liegen kleine Kurzriegel 5 an Knotenpunkten vor. Hierdurch wird die gleiche Funktion wie die der Riegel 3 erreicht. Die Kurzriegel 5 können eine einheitliche Länge von beispielsweise 40 mm aufweisen. Die Riegel 3 sind in einem Raster von 1/3 angeordnet. Die Kurzriegel 5 weisen die gleiche Dicke wie die Riegel 3 auf. Die Kurzriegel 5 besetzen Rasterpositionen, die die Riegel 3 nicht einnehmen.

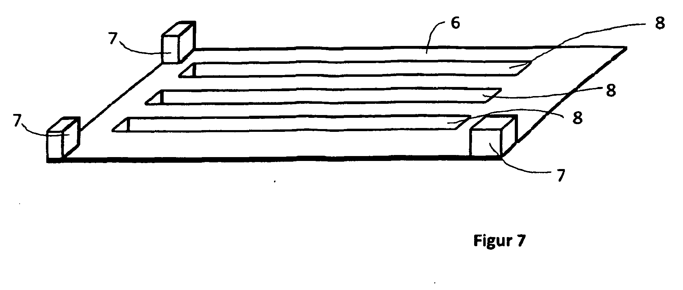

In Figur 7 ist schematisch eine Schablone 6 zur Anordnung der Riegel 3 für eine Leichtbauplatte gezeigt. Die Riegel 3 können in die Schablone 6 eingelegt werden, wobei eine Längs- oder Querausrichtung möglich ist. Die Schablone 6 kann mit Stiften eingenutet oder als Schienen- bzw. U-Profil ausgeführt werden. Es kann auch vorgesehen sein, dass eine Schablonenausführung frei verstellbare Profile aufweist, zwischen denen die Riegel 3 eingelegt werden können.

Die Schablone 6 hat an mindestens zwei Seiten einen Anschlag 7, damit die Deckel 1 exakt zur Schablone 6 positioniert werden können. Hierdurch ist eine vollautomatische und schnelle Fertigung möglich. Im in Figur 7 gezeigten Ausführungsbeispiel für eine Schablone 6 sind die Positionen für die Riegel 3 durch Vertiefungen 8 zur zumindest teilweisen Aufnahme von Riegeln 3 ausgestaltet. Die Schablone 6 kann auch ohne einen Anschlag 7 ausgestaltet sein; weist die Schablone 6 keinen Anschlag auf, so können die Schablone 6 und der Deckel 1 über Referenzpunkte und/oder äußere Abmessungen zueinander, aber unabhängig voneinander - über ein als Referenzpunkt dienendes Referenzelement - ausgerichtet werden.

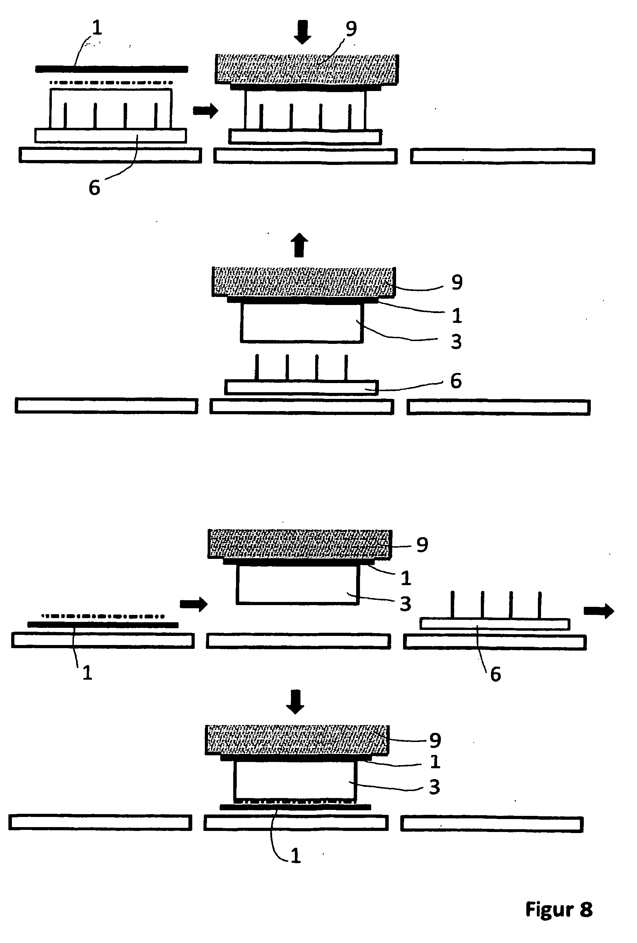

Figur 8 zeigt schematisch eine Herstellung einer Leichtbauplatte in vier Schritten. Im ersten Schritt läuft die mit Riegeln 3 bestückte Schablone 6 zusammen mit dem Deckel 1 für die Oberseite in eine Presseinheit 9. Auf den Deckel 1 ist Klebstoff an den für die Riegel 3 vorgesehenen Stellen aufgetragen. Es erfolgt eine Verpressung. Im zweiten Schritt fährt die Presseinheit 9 hoch und es wird der Deckel 1 zusammen mit den nunmehr mit dem Deckel 1 verklebten Riegeln 3 aus der Schablone 6 gezogen. Im dritten Schritt fährt die Schablone 6 aus der Presseinheit 9 aus und der Deckel 1 für die Unterseite, auf den an den vorbestimmten Positionen für die Riegel 3 Klebstoff aufgetragen ist, fährt in die Presseinheit 9 ein. Im vierten Schritt erfolgt die Verpressung der schon mit der Oberseite verklebten Riegel 3 mit dem Deckel 1 für die Unterseite. Die Verpressung der Riegel 3 mit den Deckeln 1 erfolgt in zwei Schritten. Im ersten Schritt wird einer der Deckel 1 - beispielsweise der "obere" Deckel - auf die Riegel 3 gepresst. Im zweiten Schritt wird der andere der beiden Deckel 1 - beispielsweise der "untere" Deckel auf die Riegel 3 gepresst.

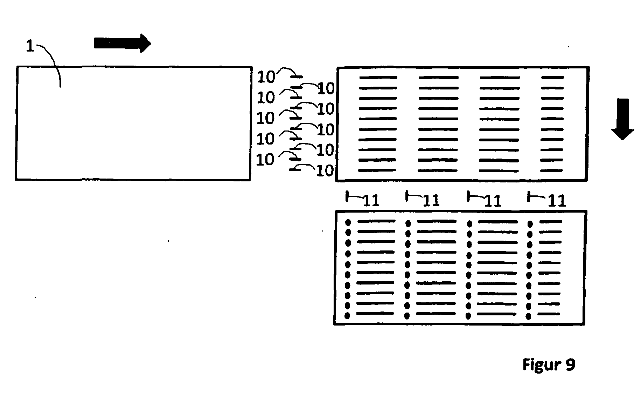

Figur 9 zeigt schematisch einen Klebstoffauftrag. Im dargestellten Ausführungsbeispiel sind die für den Klebstoffauftrag vorgesehenen Düsen 10 fest angeordnet. Der Deckel 1 fährt an den Düsen 10 vorbei. Es erfolgt ein Klebstoffauftrag in Längsrichtung an den jeweiligen Positionen des Rasters, an denen Riegel 3 vorgesehen sind. Dabei werden Zwischenräume gebildet, in die ein zweiter Klebstoff aufgetragen wird. Der Klebstoffauftrag für den zweiten Klebstoff kann in einem Querdurchlauf erfolgen. Auch hier sind Düsen 11 fix angeordnet und der schon mit dem ersten Klebstoff versehene Deckel 1 fährt an den Düsen 11 vorbei. Durch den Querauftrag für den zweiten Klebstoff kann die Anzahl der Düsen 11 für den zweiten Klebstoff gegenüber der Anzahl der Düsen 10 für den ersten Klebstoff vermindert werden.

## Patentansprüche

1. Leichtbauplatte umfassend je einen Deckel (1) für die Ober- und die Unterseite sowie eine Füllung zwischen Ober- und Unterseite, wobei die Füllung individuell positionierte, in vorbestimmten Abständen angeordnete Riegel (3) aufweist, die mit den Deckeln (1) mittels Klebstoff stoffschlüssig verbunden sind, **dadurch gekennzeichnet, dass** zumindest zwei Klebstoffe vorhanden sind, die in Längsrichtung des Riegels (3) alternierend angeordnet sind.

2. Leichtbauplatte nach Anspruch 1, **dadurch gekennzeichnet, dass** die Riegel (3) Längsriegel sind, die in einem Raster nebeneinander angeordnet sind.

3. Leichtbauplatte nach einem der Ansprüche 1 bis 2, **dadurch gekennzeichnet, dass** durch die Rasterung ein Mindestabstand zwischen zwei benachbarten Riegeln (3) von 16 mm ausgebildet ist.

4. Leichtbauplatte nach einem der Ansprüche 1 bis 3, **dadurch gekennzeichnet, dass** die Riegel (3) bezüglich der Mittellinie der Leichtbauplatte in Längsrichtung der Riegel symmetrisch angeordnet sind.

5. Leichtbauplatte nach einem der Ansprüche 1 bis 4, **gekennzeichnet durch** Riegel (3, 5) unterschiedlicher Länge.

6. Leichtbauplatte nach einem der Ansprüche 1 bis 5, **dadurch gekennzeichnet, dass** zumindest zwischen zwei Riegeln (3) eine Wabenfüllung vorhanden ist.

7. Leichtbauplatte nach einem der Ansprüche 1 bis 5, **dadurch gekennzeichnet, dass** der Raum zwischen den Riegeln (3) keine Füllung aufweist.

8. Verfahren zur Herstellung einer Leichtbauplatte, die je einen Deckel (1) für Ober- und Unterseite aufweist, wobei das Verfahren umfasst: Auftragen von Klebstoff an vorbestimmten Positionen der Deckel (1), Positionieren von Riegeln (3) an den vorbestimmten Positionen und Verpressen der Riegel (3) mit den Deckeln (1) an den vorbestimmten Positionen, **gekennzeichnet durch** Verwenden von mindestens zwei unterschiedlichen Klebstoffen, die in Längsrichtung des Riegels (3) alternierend aufgebracht werden.

9. Verfahren nach Anspruch 8, **gekennzeichnet durch** Auftragen der mindestens zwei unterschiedlichen Klebstoffe in verschiedenen Auftragsrichtungen.

10. Verfahren nach Anspruch 8 oder 9, **gekennzeichnet durch** Verwenden einer Schablone (6), in der die Riegel (3) einer Leichtbauplatte angeordnet werden.

11. Verfahren nach einem der Ansprüche 8 bis 10, **gekennzeichnet durch** Aufbringen des Klebstoffs auf einen Deckel (1), Positionieren der mit Riegeln (3) bestückten Schablone (6) unterhalb des Deckels (1), Verpressen der Schablone (6) mit dem Deckel (1), Hochziehen des Deckels (1) mit den Riegeln (3).

12. Vorrichtung zur Herstellung einer Leichtbauplatte nach einem der Ansprüche 1 bis 7, **dadurch gekennzeichnet, dass** ein Auftragssystem für zumindest zwei Klebstoffe derart ausgestaltet ist, dass der Klebstoffauftrag zweier Klebstoffe in Längsrichtung eines Riegels alternierend erfolgt.

13. Vorrichtung nach Anspruch 12, **dadurch gekennzeichnet, dass** eine Einrichtung zu individuellen Positionierung von Riegeln (3) in vorbestimmten Abständen vorgesehen ist.

14. Vorrichtung nach Anspruch 12 oder 13, **dadurch gekennzeichnet, dass** eine Einrichtung zur Riegelfertigung vorgesehen ist.

15. Vorrichtung nach einem der Ansprüche 12 bis 14, **dadurch gekennzeichnet, dass** zwei Einrichtungen zum Klebstoffauftrag vorgesehen sind, die den Klebstoff in unterschiedlichen Richtungen auftragen.

16. Vorrichtung nach einem der Ansprüche 12 bis 15, **dadurch gekennzeichnet, dass** zur individuellen Positionierung der Riegel eine Einrichtung aufweisend eine Schablone (6) vorgesehen ist.

## Claims

1. A lightweight building board comprising a respective cover (1) for the upper side and the underside, as well as a filling between the upper side and the underside, wherein the filling features individually positioned transoms (3) that are arranged at predefined distances from one another and firmly bonded to the covers (1) by means of adhesive, **characterized in that** at least two adhesives are provided and arranged alternately in the longitudinal direction of the transom (3).

2. The lightweight building board according to claim 1, **characterized in that** the transoms (3) are realized in the form of longitudinal transoms that are arranged adjacent to one another in a grid.

3. The lightweight building board according to one of claims 1-2, **characterized in that** a minimum distance of 16 mm is realized between two adjacent transoms (3) due to the grid arrangement.

4. The lightweight building board according to one of claims 1-3, **characterized in that** the transoms (3) are arranged symmetrically in the longitudinal direction of the transoms referred to the center line of the lightweight building board.

5. The lightweight building board according to one of claims 1-4, **characterized by** transoms (3, 5) of different length.

6. The lightweight building board according to one of claims 1-5, **characterized in that** a honeycomb filling is provided at least between two transoms (3).

7. The lightweight building board according to one of claims 1-5, **characterized in that** the space between the transoms (3) contains no filling.

8. A method for manufacturing a lightweight building board that features a respective cover (1) for the upper side and the underside, wherein said method comprises the steps of: applying glue on predefined locations of the covers (1), positioning transoms (3) at the predefined locations and pressing together the transoms (3) and the covers (1) at the predefined locations, **characterized by** the utilization of at least two different adhesives that are applied alternately in the longitudinal direction of the transom (3).

9. The method according to claim 8, **characterized by** the application of the at least two different adhesives in different application directions.

10. The method according to claim 8 or 9, **characterized by** the utilization of a template (6), in which the transoms (3) of a lightweight building board are arranged.

11. The method according to one of claims 8-10, **characterized by** the steps of applying the adhesive on a cover (1), positioning the template (6) fitted with transoms (3) underneath the cover (1), pressing together the template (6) and the cover (1) and raising the cover (1) with the transoms (3).

12. A device for manufacturing a lightweight building board according to one of claims 1-7, **characterized in that** an application system for at least two adhesives is realized in such a way that the application of two adhesives takes place alternately in the longitudinal direction of a transom.

13. The device according to claim 12, **characterized in that** a device is provided for individually positioning transoms (3) at predefined distances from one another.

14. The device according to claim 12 or 13, **characterized in that** a transom production device is provided.

15. The method according to one of claims 12-14, **characterized in that** two adhesive application devices are provided and respectively apply adhesive in different directions.

16. The method according to one of claims 12-15, **characterized in that** a device featuring a template (6) is provided for individually positioning the transoms.

## Revendications

1. Panneau léger comprenant un élément de recouvrement respectif (1) pour le dessus et le dessous ainsi qu'un remplissage entre le dessus et le dessous, sachant que le remplissage présente des barres (3) individuellement positionnées et disposées à des intervalles prédéfinis, qui sont assemblées par liaison de matière aux éléments de recouvrement (1) au moyen de produit adhésif, **caractérisé en ce qu'**au moins deux produits adhésifs sont présents, qui sont disposés en alternance dans la direction longitudinale de la barre (3).

2. Panneau léger selon la revendication 1, **caractérisé en ce que** les barres (3) sont des barres longitudinales, qui sont disposées les unes à côté des autres suivant une trame.

3. Panneau léger selon la revendication 1 ou 2, **caractérisé en ce que** la trame forme une distance minimale de 16 mm entre deux barres voisines (3).

4. Panneau léger selon l'une des revendications 1 à 3, **caractérisé en ce que** les barres (3) sont disposées symétriquement, dans la direction longitudinale des barres, par rapport à la ligne médiane du panneau léger.

5. Panneau léger selon l'une des revendications 1 à 4, **caractérisé par** des barres (3, 5) de longueurs différentes.

6. Panneau léger selon l'une des revendications 1 à 5, **caractérisé en ce qu'**un remplissage alvéolaire est présent au moins entre deux barres (3).

7. Panneau léger selon l'une des revendications 1 à 5, **caractérisé en ce que** l'espace entre les barres (3) ne présente pas de remplissage.

8. Procédé de fabrication d'un panneau léger qui présente un élément de recouvrement respectif (1) pour le dessus et le dessous, sachant que le procédé comprend les étapes suivantes : application de produit adhésif à des positions prédéfinies des éléments de recouvrement (1), positionnement des barres (3) aux positions prédéfinies et assemblage par pressage des barres (3) avec les éléments de recouvrement (1) aux positions prédéfinies, **caractérisé par** l'utilisation d'au moins deux produits adhésifs différents, qui sont appliqués en alternance dans la direction longitudinale de la barre (3).

9. Procédé selon la revendication 8, **caractérisé par** l'application des au moins deux produits adhésifs différents dans différentes directions d'application.

10. Procédé selon la revendication 8 ou 9, **caractérisé par** l'utilisation d'un gabarit (6), dans lequel sont disposées les barres (3) d'un panneau léger.

11. Procédé selon l'une des revendications 8 à 10, **caractérisé par** l'application du produit adhésif sur un élément de recouvrement (1), le positionnement du gabarit (6) équipé de barres (3) en dessous de l'élément de recouvrement (1), l'assemblage par pressage du gabarit (6) avec l'élément de recouvrement (1), le relevage de l'élément de recouvrement (1) avec les barres (3).

12. Dispositif de fabrication d'un panneau léger selon l'une des revendications 1 à 7, **caractérisé en ce qu'**un système d'application pour au moins deux produits adhésifs est conçu de telle sorte que l'application de deux produits adhésifs s'effectue en alternance dans la direction longitudinale d'une barre.

13. Dispositif selon la revendication 12, **caractérisé en ce qu'**il est prévu un équipement pour le positionnement individuel de barres (3) à des intervalles prédéfinis.

14. Dispositif selon la revendication 12 ou 13, **caractérisé en ce qu'**il est prévu un équipement pour la fabrication de barres.

15. Dispositif selon l'une des revendications 12 à 14, **caractérisé en ce qu'**il est prévu deux équipements pour l'application de produit adhésif, qui appliquent le produit adhésif dans des directions différentes.

16. Dispositif selon l'une des revendications 12 à 15, **caractérisé en ce qu'**il est prévu, pour le positionnement individuel des barres, un équipement présentant un gabarit (6).
